Europäisches Patentamt

European Patent Office

Office européen des brevets

(11) Veröffentlichungsnummer: **0 386 751**

**A1**

(12) ## EUROPÄISCHE PATENTANMELDUNG

(21) Anmeldenummer: 90104408.1

(51) Int. Cl.5: **B60J 11/00**

(22) Anmeldetag: 08.03.90

(30) Priorität: **10.03.89 DE 3907750**

(43) Veröffentlichungstag der Anmeldung:
**12.09.90 Patentblatt 90/37**

(84) Benannte Vertragsstaaten:
**AT BE CH DE DK ES FR GB GR IT LI LU NL SE**

(71) Anmelder: **Walter, Dieter**
**Taunusstrasse 54**
**D-6453 Seligenstadt 3(DE)**

(72) Erfinder: **Walter, Dieter**
**Taunusstrasse 54**
**D-6453 Seligenstadt 3(DE)**

(74) Vertreter: **Schumacher, Bernd, Dipl.-Ing.**
**Am Schwaberg 13**
**D-6450 Hanau 6(DE)**

(54) **Sonnenschutzvorrichtung für Kraftfahrzeuge.**

(57) Bei einer Sonnenschutzvorrichtung für Kraftfahrzeuge mit einer durch Befestigungsmittel (10) auf einem Kofferraumdeckel oder einer Schräghecktür quer zur Fahrtrichtung anzubringenden länglichen Abdeckung (34), unter der eine Rolle (42), insbesondere ein Springrollo, mit einer darauf aufgewickelten Abschirmfolie, insbesondere einer aluminiumbedampften Folie, drehbar gelagert ist, die durch eine Längsöffnung (36) der Abdeckung (34) von der Rolle (42) gegen Federrückstellkraft abwickelbar und über das Kraftfahrzeug in dessen Längsrichtung nach vorne ziehbar sowie an seiner Vorderseite festlegbar ist, wird vorgeschlagen, daß die Befestigungsmittel (10) als die Abdeckkung (34) endseitig begrenzende sowie haltende Deckelkappen (12) ausgebildet sind, die jeweils innenseitig eine Rollenlagerung zum drehbaren Festlegen der Rolle (42) und unterseitig einen Befestigungsfuß (14,16,18) zum Befestigen an dem Kraftfahrzeug aufweisen. Eine solche Sonnenschutzvorrichtung ist kompakt, raumsparend und stabil ausgebildet. Vorzugsweise ermöglichen die Befestigungsmittel ein verklemmendes Fixieren an den seitlichen Rändern von Kofferraumdeckeln, Schräghecktüren oder dergleichen. Ferner ist es bevorzugt die Befestigungsmittel zweiteilig mit einer Breiteneinstellbarkeit zur Anpassung an unterschiedliche Kraftfahrzeugbreiten auszubilden.

Fig. 1.

Die Erfindung betrifft eine Sonnenschutzvorrichtung gemäß dem Oberbegriff von Patentanspruch 1.

Bekannte Sonnenschutzvorrichtungen der genannten Art haben insbesondere den Nachteil, daß sie aufgrund ihres konstruktiven Aufbaues umständlich zu handhaben und nur in unbefriedigender Weise am Kraftfahrzeug zu befestigen sind. Dabei besteht das besondere Problem, daß die Befestigung unterschiedliche Einbaubedingungen berücksichtigen muß, zu keinerlei Lackschäden oder dergleichen führen darf, optisch unauffällig sein sollte, eine schnelle Montage sowie Demontage zulassen muß und unbedingt einen völlig sicheren Halt gewährleisten muß. Diese Bedingungen werden von bekannten Sonnenschutzvorrichtungen nicht erfüllt.

Der vorliegenden Erfindung liegt daher die Aufgabe zugrunde, eine Sonnenschutzvorrichtung der genannten Art vielseitig anpaßbar, betriebssicher und leicht sowie schnell montierbar und demontierbar auszubilden.

Zur Lösung der gestellten Aufgabe zeichnet sich eine Sonnenschutzvorrichtung der im Oberbegriff von Patentanspruch 1 genannten Art erfindungsgemäß durch die im Kennzeichen dieses Anspruchs aufgeführten Merkmale aus. Da sich die Sonnenschutzvorrichtung ohnehin über die Breite des Kraftfahrzeugs erstreckt, ist es äußerst zweckmäßig, die Befestigungsmittel mit einer Mehrfachfunktion auszugestalten, nämlich zur stirnseitigen Begrenzung der Abdeckung, zur Lagerung der Rolle mit der Abschirmfolie und zum Festlegen am Kraftfahrzeug. Hierdurch ergibt sich eine sehr kompakte, raumsparende, leichte und preiswerte Vorrichtung, die im unmittelbaren Angrenzungsbereich der äußeren Befestigungsmittel in stabiler Weise über die Halter an seitlichen Rändern eines Kofferraumdekkels oder einer Sohräghecktür weitgehend unauffällig zu befestigen ist. Die Befestigungsfüße sind von den Haltern abnehmbar und ermöglichen durch großflächige Auflage eine sichere Befestigung sowie einen ausreichenden Abstand zwischen der Abdeckung und Kraftfahrzeugteilen.
Die Weiterbildung von Anspruch 2 ermöglicht eine Völlige Verletzungsfreiheit von Kraftfahrzeugteilen im Befestigungsbereich der Sonnenschutzvorrichtung. Da das Festklemmen mittels Klemmschrauben an der Innenseite des Randes eines Kofferraumdeckels oder einer Schräghecktür erfolgt und da Verbindungsglieder, wie Zugbänder, zwischen den Befestigungsmitteln a den beiden Enden der Sonnenschutzvorrichtung fehlen, liegt eine sehr ansprechende, nämlich unauffällige, und dennoch äußerst stabile, vielseitig anpaßbare Bauform vor. Da die Halteplatte mit dem umgebördelten Klemmrand verformt, wie umgebogen oder umgeknickt, sein kann, ist das Befestigungsmittel praktisch an alle Einbaubedingungen leicht und schnell anpaßbar.

Äußerst zweckmäßig ist auch die Weiterbildung von Anspruch 3, die eine sehr leichte Anpaßbarkeit an die genaue Breite eines Kofferraumdeckels oder einer Schräghecktür ermöglicht, was erforderlich ist, damit nicht für alle Anwendungsfälle zu viele verschieden breite Sonnenschutzvorrichtungen zur Verfügung gestellt werden müssen.

Bei der Breitenanpassung ist die Weiterbildung von Anspruch 4 zweckmäßig, die ein schnelles und sicher fixierendes Verklemmen zwischen dem Auflageschenkel und der Halteplatte ermöglicht.

Die Weiterbildungen der Ansprüche 5 und 6 sorgen einerseits für eine sicherere Befestigung der Sonnenschutzvorrichtung, weil vulkanisierte oder beschichtete Oberflächen beim Verklemmen wesentlich besser fixierbar sind, und andererseits für eine Erhöhung der Sicherheit von Personen, weil Kanten von metallischen Teilen abgedeckt sind. Außerdem wird hierdurch das Aussehen der Befestigungsmittel verbessert und unter Berücksichtigung der Umwelteinflüsse langzeitstabil.

Die Weiterbildungen der Ansprüche 7 bis 9 sorgen für eine sichere, stabile und leicht herstellbare Verbindung zwischen der Abdekkung und den Befestigungsmitteln.

Die Weiterbildungen der Ansprüche 10 und 11 ermöglichen eine Variation der Ausbildung der Abdeckung unter Berücksichtigung der jeweiligen Anwendungsfälle.

Eine Ausbildung gemäß Anspruch 12 ist bevorzugt, unter anderem deshalb, weil hierdurch eine optimale Massenfertigung von Abdekkungen unterschiedlicher Längen möglich ist.

Mit den Weiterbildungen der Ansprüche 13 und 14 ist es möglich, auf sehr einfache Weise eine stabile, lösbare, gepufferte Arretierung der Endleiste im aufgerollten Zustand der Abschirmfolie zu gewährleisten. Gleichzeitig wird dabei die Längsöffnung der Abdekkung verschlossen, so weit diese nicht unterseitig offen ausgebildet ist.

Sehr zweckmäßig ist auch die Weiterbildung von Anspruch 15, die mit Hilfe der Seitenteile eine wirksame Abdeckung von Seitenfenstern ermöglicht. Im eingerollten Zustand sind die Seitenteile auf die Hauptbahn der Abschirmfolie zurückgeschlagen und hieran durch Klettverschlüsse oder dergleichen lagefixiert. Im ausgezogenen Zustand der Abschirmfolie werden die Seitenteile heruntergeklappt und mit irgendwelchen Festlegungsmitteln so am Kraftfahrzeug fixiert, daß die Seitenteile nicht durch Windeinflüsse oder dergleichen hochwehen.

Die Erfindung wird nachfolgend an zeichnerisch dargestellten Ausführungsbeispielen näher erläutert. Es zeigen:

Figur 1 - die Sonnenschutzvorrichtung nach der vorliegenden Erfindung in einem Querschnitt mit Blick auf ein an einem Ende befindliches Befestigungsmittel,

Figur 2 - eine Figur 1 ähnelnde Ansicht, jedoch mit modifizierter, nämlich untenseitig offener, Abdeckung,

Figur 3 - einen Endbereich der Sonnenschutzvorrichtung in einer schematischen Seitenansicht,

Figur 4 - einen eine Deckelkappe aufweisenden ersten Teil eines Befestigungsmittels in drei Ansichten,

Figur 5 - einen zweiten Teil eines Befestigungsmittels und

Figur 6 - in einer schematischen perspektivischen Ansicht die Abschirmfolie in ihrem ausgezogenen Abdeckungszustand.

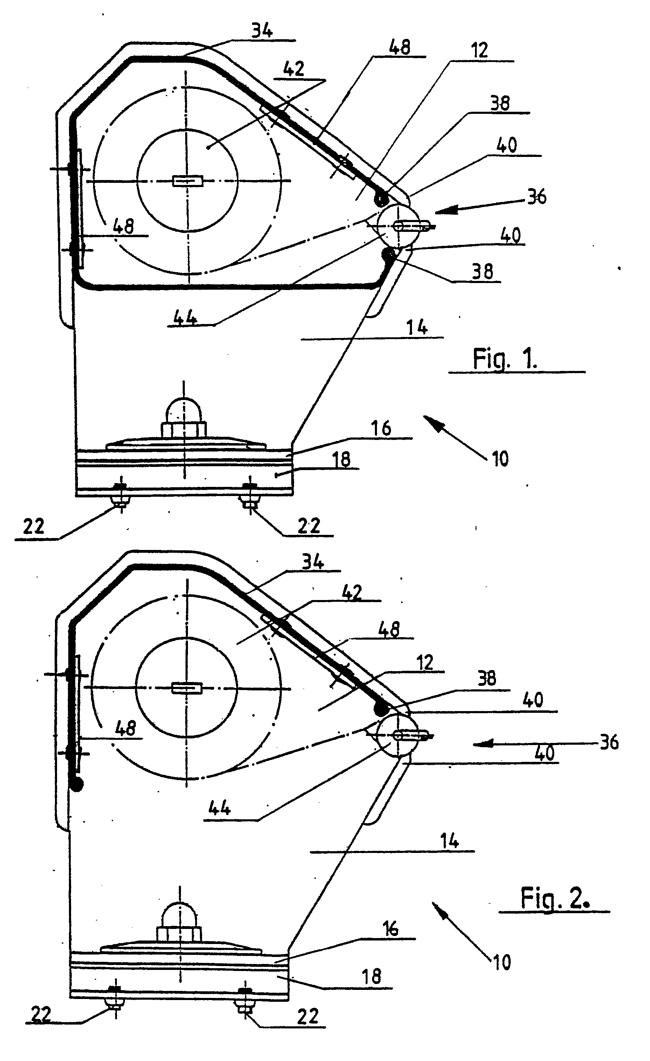

Gemäß den Figuren 1 bis 5 weisen Befestigungsmittel 10 an den Enden der Sonnenschutzvorrichtung Deckelkappen 12 mit etwa in deren Ebene verlaufenden Verbindungsschenkeln 14 auf, die jeweils als Abstandshalter dienen und zu Auflageschenkeln 16 nach innen abgebogen sind. Die letzteren dienen als Auflagemittel zum Festlegen auf einer Halteplatte 18 des Befestigungsmittels 10. Die Halteplatte 18 hat einen äußeren, um 180 Grad umgebördelten Klemmrand 20 mit im vorliegenden Fall zwei Klemmschrauben 22 am äußeren Rand.

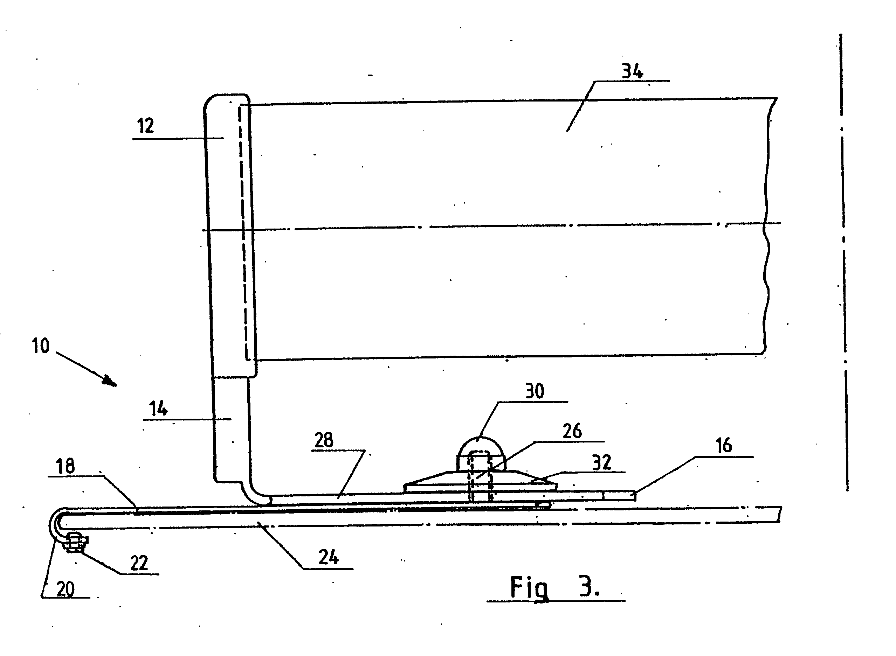

Gemäß der schematischen Darstellung in Figur 3 kann so die Halteplatte 18 mittels der Klemmschrauben 22 am äußeren Rand eines Kofferraumdeckels 24 oder einer Schräghecktür eines Kraftfahrzeugs sehr leicht befestigt werden. Die Befestigung zwischen dem Auflageschenkel 16 und der Halteplatte 18 erfolgt mittels eines Gewindebolzens 26, der durch einen Längsschlitz 28 des Auflageschenkels 16 greift und mit einer Mutter 30, wie einer Hutmutter, mit untergelegter Federscheibe 32 verklemmend verschraubbar ist. die Mutter kann eine verschließbare Diebstahlsicherung aufweisen. Da vorzugsweise die miteinander in Klemmeingriff gelangenden Teile des Befestigungsmittels und auch die Unterseite der Halteplatte 18 vulkanisiert sind, ergibt sich ein sehr fester, für die Kraftfahrzeugteile schonender Klemmeingriff. Der Längsschlitz 28 ermöglicht ein leichtes Anpassen des Abstandes zwischen den Klemmrändern 20 der beiden Halteplatten 18. Außerdem kann die Sonnenschutzvorrichtung sehr leicht und schnell von der Halteplatte 18 abgenommen bzw. hierauf aufgesetzt werden.

Eine Abdeckung 34 ist in Figur 1 als gehäuseförmig geschlossenes Profil mit einer schmalen Längsöffnung 36 zum Herausziehen der Abschirmfolie ausgebildet. Es kann sich beispielsweise um ein Aluminium-Strangpreßprofil handeln. In Figur 2 ist die Abdeckung 34 nach unten offen. An den Längsrändern besitzt die Abdeckung 34 Begrenzungswülste. In Verlängerung der Längsöffnung 36 befindet sich an den Deckelkappen 12 der Befegungsmittel 10 eine Aussparung 50 mit gummierten Begrenzungen 40, die die Aussparung 50 einlaßseitig etwas verengen. Hierdurch soll eine Endleiste 44 im eingerollten Zustand der auf einer Rolle 42 aufgerollten Abschirmfolie lösbar und gepuffert fixierbar sein. Die Rolle 42 erstreckt sich unterhalb bzw. innerhalb der Abdeckung 34 in Längsrichtung dersel ben und greift endseitig in Rollenlagerungen 46 an den Deckelkappen 12. In den Figuren 1 und 2 ist der aufgerollte Zustand der Abschirmfolie dargestellt, wobei die im Querschnitt kreisrunde Endleiste 44 in den Aussparungen 50 der Deckelkappen 12 gehalten ist und im übrigen gemäß Figur 1 die Längsöffnung 36 der Abdeckung 34 verschließt.

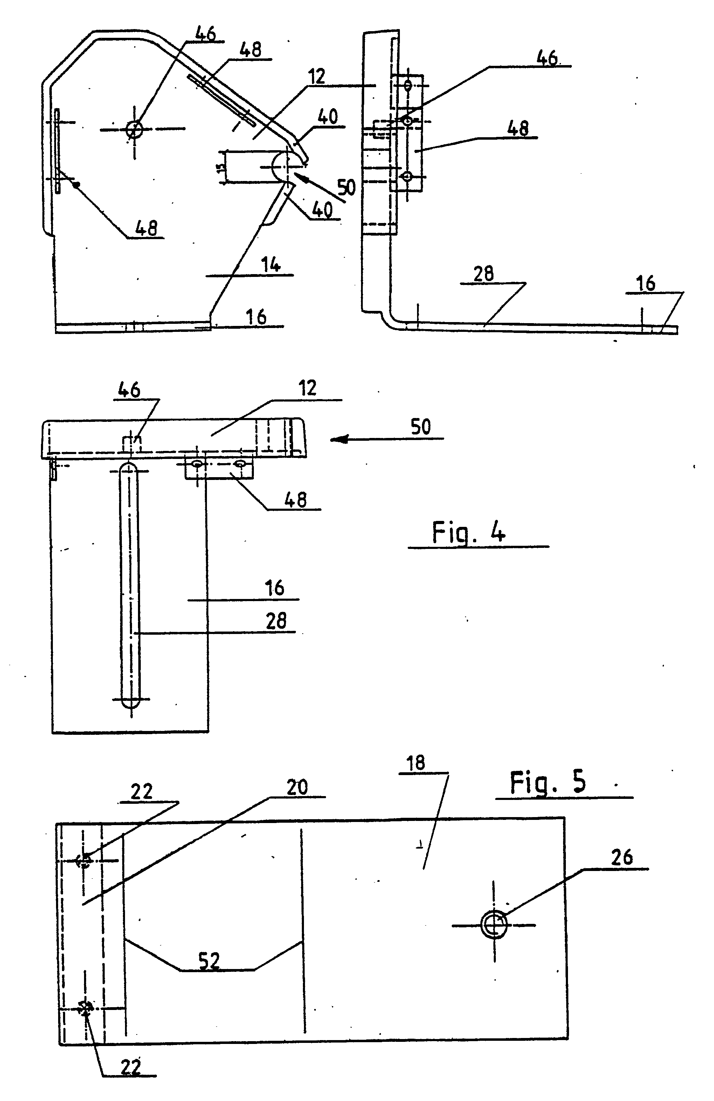

Aus Figur 4 ist deutlich erkennbar, daß die Deckelkappen 12 der Befestigungsmittel 10 zwei nach innen ragende leistenförmige Vorsprünge 48 aufweisen, auf die das Profil der Abdeckung 34 aufgeschoben werden kann. Zur endgültigen Fixierung der Abdeckung 34 an der Deckelkappe 12 kann die Abdeckung mit den Vorsprüngen vernietet oder auch verschraubt werden.

Aus den Figuren ist ersichtlich, daß die Deckelkappen 12 einschließlich des Verbindungsschenkels 14 relativ kompakt sind. Dieses liegt zum einen daran, daß die Deckelkappe 12 mit einem Rand den Endbereich der Abdeckung 34 etwas umschließt, zum anderen jedoch daran, daß diese äußeren Teile besonders stark vulkanisiert sind, damit keinerlei Verletzungsgefahr für Personen oder auch dagegenstoßende Gegenstände besteht.

In Figur 5 ist angedeutet, daß die Halteplatte 18 an einem oder mehreren Bereichen Knickstellen 52 aufweisen kann, um so beispielsweise eine Formanpassung der Halteplatte 18 an einen Kofferraumdeckel oder dergleichen vornehmen zu können. Die Halteplatte 18 kann zu diesem Zweck beliebig geformt, auch abgerundet, werden, um eine satte Auflage derselben zu gewährleisten. Das ist für einen sicheren Halt und eine schonende Auflage äußerst wichtig.

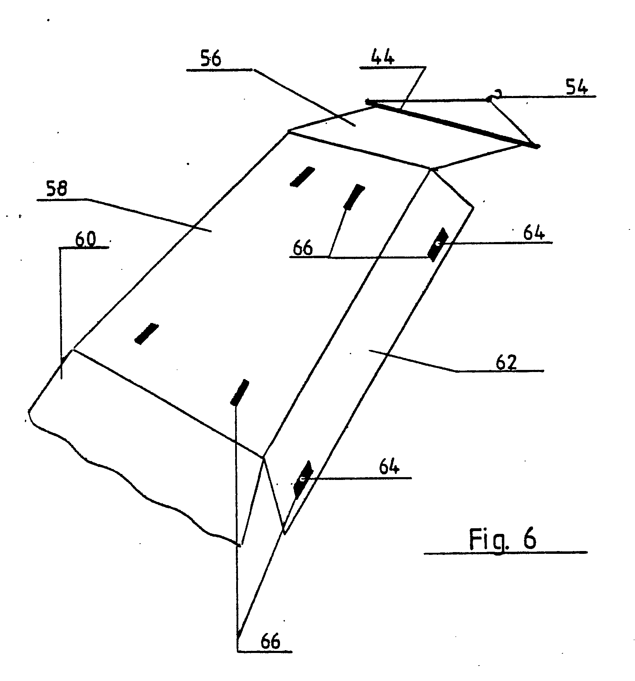

Gemäß Figur 6 hat die Abschirmfolie im ausgezogenen Zustand einen Frontabschnitt 56, einen Mittel- oder Dachabschnitt 58 und einen rückwärtigen Abschnitt 60. Am Frontabschnitt 56, der die Windschutzscheibe und gegebenenfalls weitere vordere Bereiche des Kraftfahrzeugs abdeckt, befindet sich die Endleiste 44 mit einem Hakenbefestigungsmittel 54 oder dergleichen, das beispielsweise an einer vorderen Stoßstange lösbar fixiert wird. An den Mittel-oder Dachabschnitt 58 grenzen Seitenteile 62 an, die zum Abdecken von Seitenfenstern dienen und im Ruhezustand auf der Hauptbahn der Abschirmfolie ruhen. Dort sind sie beispielsweise mittels Klettverschlüssen 66 lösbar fixiert. Die Seitenteile 62 sind im vorliegenden Fall mit Befestigungsmitteln in Form von Ösen 64 ausgebildet, an denen Befestigungsmittel zur lagemäßigen Fixierung der Seitenteile 62 in Gebrauchsposition fixierbar sind. Die Befestigungsmittel können beispielsweise mit Haken ausgebildete Gummibänder oder dergleichen sein, mittels derer eine Fixierung an Radkästen, Seitenspiegeln oder dergleichen möglich ist.

## Ansprüche

1. Sonnenschutzvorrichtung für Kraftfahrzeuge mit einer durch Befestigungsmittel auf einem Kofferraumdeckel oder einer Schräghecktür quer zur Fahrtrichtung anzubringenden länglichen Abdekkung, unter der eine Rolle, insbesondere ein Springrollo, mit einer darauf aufgewickelten Abschirmfolie, insbesondere einer aluminiumbedampften Folie, drehbar gelagert ist, die durch eine Längsöffnung der Abdeckung von der Rolle gegen Federrückstellkraft abwickelbar und über das Kraftfahrzeug in dessen Längsrichtung nach vorne ziehbar sowie an seiner Vorderseite festlegbar ist, **dadurch gekennzeichnet,** daß die Befestigungsmittel (10) zwei die Abdeckung (34) endseitig begrenzende sowie haltende Deckelkappen (12) aufweisen,
die jeweils innenseitig eine Rollenlagerung (46) zum drehbaren Festlegen der Rolle (42) und unterseitig einen Befestigungsfuß (14, 16, 18) haben, daß jeder Befestigungsfuß ein Winkelglied mit einem etwa in der Ebene der Deckelkappe (12) verlaufenden Verbindungsschenkel (14) sowie einem sich hierzu unterseitig etwa rechtwinklig nach innen erstreckenden Auflageschenkel (16) aufweist und daß jeder Auflageschenkel (16) auf einem Halter (18) des Befestigungsmittels lösbar festlegbar, insbesondere anschraubbar, ist, der seinerseits direkt am Rand eines Kofferraumdeckels oder einer Schräghecktür festklemmbar ist.

2. Vorrichtung nach Anspruch 1, dadurch gekennzeichnet, daß der anpaßbar verformbare oder bereits verformte Halter (18) des Befestigungsmittels als eine auf dem Kofferraumdeckel oder der Schräghecktür satt aufzulegende Halteplatte ausgebildet ist, die an einer Seite einen umgebördelten Klemmrand (20) mit wenigstens einer, vorzugsweise zwei, hieran befindlichen Klemmschraube (22) zum Festklemmen des umgebördelten Plattenrandes am Rand des Kofferraumdeckels oder der Schräghecktür aufweist.

3. Vorrichtung nach Anspruch 1 oder 2, dadurch gekennzeichnet, daß der Auflageschenkel (16) einen Längsschlitz (28) und die Halteplatte (18) einen durch den Längsschlitz greifenden Gewindebolzen (26) aufweisen.

4. Vorrichtung nach Anspruch 3, dadurch gekennzeichnet, daß der Auflageschenkel (16) und die Halteplatte (18) durch eine Mutter (30), vorzugsweise eine Hutmutter, mit einer untergelegten Federscheibe (32) lösbar und längsverstellbar fest miteinander verklemmbar sind und daß vorzugsweise eine Diebstahlsiche-für die Mutter vorgesehen ist.

5. Vorrichtung nach einem der Ansprüche 1 bis 4, dadurch gekennzeichnet, daß die Deckelkappe (12) zumindest außen, der Auflageschenkel (16) zumindest unterseitig und die Halteplatte (18) des Befestigungsmittels (10) beidseitig vulkanisiert und/oder mit Kunststoff beschichtet sind.

6. Vorrichtung nach Anspruch 5, dadurch gekennzeichnet, daß weitgehend alle äußeren Bereiche der Befestigungsmittel (10) vulkanisiert und/oder mit Kunststoff beschichtet sind.

7. Vorrichtung nach einem der Ansprüche 1 bis 6, dadurch gekennzeichnet, daß die Deckelkappen (12) mit der Abdeckung (34) fest vernietet oder lösbar verschraubt sind.

8. Vorrichtung nach einem der Ansprüche 1 bis 7, dadurch gekennzeichnet, daß die Deckelkappen (12) innenseitige Vorsprünge (48) zum Zentrieren und Halten der Abdeckung (34) aufweisen.

9. Vorrichtung nach Anspruch 8, dadurch gekennzeichnet, daß die Vorsprünge (48) als längliche, an der Innenseite der Abdeckung (34) anliegende Befestigungsleisten ausgebildet sind.

10. Vorrichtung nach einem der Ansprüche 1 bis 9, dadurch gekennzeichnet, daß die Abdeckung (34) als ein bis auf eine schmale Längsöffnung (36) rundum geschlossenes Gehäuse ausgebildet ist.

11. Vorrichtung nach einem der Ansprüche 1 bis 9, dadurch gekennzeichnet, daß die Abdeckung (34) unten offen ausgebildet ist.

12. Vorrichtung nach Anspruch 10 oder 11, dadurch gekennzeichnet, daß die Abdeckung (34) als Strangpreßprofil, wie ein solches aus Aluminium, ausgebildet ist.

13. Vorrichtung nach einem der Ansprüche 1 bis 12, dadurch gekennzeichnet, daß jede Deckelkappe (12) eine mit der Längsöffnung (36) fluchtende gummierte Aussparung (50) mit verminderter Eintrittsöffnung zum rastend arretierenden, gepufferten Aufnehmen einer vorzugsweise im Querschnitt runden Endleiste (44) an der Abschirmfolie aufweist.

14. Vorrichtung nach Anspruch 13, dadurch gekennzeichnet, daß die Endleiste (44) im Aufnahmezustand an den Deckelkappen (12) die Längsöffnung (36) der Abdeckung (34) verschließt.

15. Vorrichtung nach einem der Ansprüche 1 bis i4, dadurch gekennzeichnet, daß die Abschirmfolie an beiden Längsrändern zum Abdecken von Seitenfenstern dienende umklappbare Seitenteile (62) aufweist, die mit Festlegungsmitteln (64, 66) zum Festlegen in einer Fensterabdeckposition und in einer zurückgeschlagenen Ruheposition versehen sind.

16. Vorrichtung nach Anspruch 15, dadurch gekennzeichnet, daß die Festlegungsmittel (64, 66) Schlaufen und/oder Ösen und/oder Klettverschlüsse und/oder Gummibänder mit Haken oder dergleichen aufweisen.

EP 0 386 751 A1

Fig. 1.

Fig. 2.

Fig 3.

EP 0 386 751 A1

Fig. 4

Fig. 5

56    44              54

58

60

64

66

62

64

66

Fig. 6

# EUROPÄISCHER RECHERCHENBERICHT

## EINSCHLÄGIGE DOKUMENTE

EP 90104408.1

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | US - A - 3 292 684 (JINES) * Gesamt * -- | 1,7,15 | B 60 J 11/00 |
| A | DE - A1 - 3 446 600 (BLATTMANN) * Gesamt * -- | 1,10, 14,15, 16 | |
| A | DE - A1 - 3 520 448 (HASSE) * Gesamt * -- | 1,15, 16 | |
| A | AU - B - 23774/84 (MAZZA) * Gesamt * -- | 1,2,3, 10 | |
| A | EP - A1 - 0 305 579 (SU) * Fig. 1,11 * ---- | 1,15, 16 | |

| RECHERCHIERTE SACHGEBIETE (Int Cl⁵) |
|---|
| B 60 J |

Der vorliegende Recherchenbericht wurde für alle Patentansprüche erstellt.

| Recherchenort WIEN | Abschlußdatum der Recherche 12-06-1990 | Prüfer SCHMICKL |
|---|---|---|